# EUROPÄISCHE PATENTANMELDUNG

(11) **EP 1 094 428 A2**
(43) Veröffentlichungstag der Anmeldung: **25.04.2001**
(21) Anmeldenummer: 00890215.7
(22) Anmeldetag: 11.07.2000
(51) Int. Cl.: G08G 1/095

(54) **Lampensäule**

(30) Priorität: 19.10.1999 AT 176599; 04.04.2000 AT 5742000
(71) Anmelder: Forster Verkehrs- und Werbetechnik GmbH, 3340 Waidhofen an der Ybbs (AT)
(72) Erfinder: Forster, Franz, 3340 Waidhofen/Ybbs (AT)
(74) Vertreter: Beer, Manfred, Dipl.-Ing.

(57) **Zusammenfassung**

Eine Lampensäule besitzt ein Gehäuse(1), an dem Anschlußenden (2) von zwei Lichtwellenleitern (3) festgelegt sind. In dem im wesentlichen quaderförmigen Gehäuse (1) ist ein Verteilspiegel (6) angeordnet, der Licht aus einer Lichtquelle (10, 12) gleichmäßig auf beide Lichtwellenleiter (3) verteilt. An beiden den Anschlußenden (2) gegenüberliegenden Wänden (8) des Gehäuses (1) sind eine Hauptlampe (10) und wenigstens zwei, vorzugsweise aber drei oder mehr Nebenlampen (12) angeordnet, die auf Schiebern (20, 20') montiert sind, die in der Gebrauchslage lotrecht verschiebbar in Führungsnuten (22) an den Gehäusewänden (8) verschiebbar sind. Nach dem Ausbrennen der Hauptlampe (10) wird eine Rückhaltevorrichtung gelöst und der Schieber (20) gleitet unter seinem Eigengewicht bis zu einem Anschlag (21) nach unten. So wird die am Schieber (20) montierte erste Nebenlampe (12) in ihrer Wirkstellung angeordnet und kann in Betrieb genommen werden. So können ohne manuelle Austausch- oder Servicearbeiten nacheinander wenigstens vier Lampen (eine Hauptlampe (10) und drei Nebenlampen (12)) in Betrieb genommen werden.

## Beschreibung

Die Erfindung betrifft eine Lampensäule, wie sie in Lichtanzeigesystemen mit faseroptischer Lichteinspeisung, insbesondere für Wechselverkehrszeichen verwendet werden, bei welchen die darzustellenden, gegebenenfalls aus mehreren Anzeigesymbolen zusammengesetzten Informationszeichen (Verkehrszeichen) durch Rasterungen von Lichtleiter-Lichtaustritten gebildet sind.

Aus der DE 44 42347 A ist ein Lichtanzeigesystem mit faseroptischer Lichteinspeisung bekannt, bei welchem den Lichtleiterkabelbäumen für die verschiedenen Anzeigesymbole jeweils eine Hauptlampe und mehrere Nebenlampen zugeordnet sind. Die den Lichtleiterkabelbäumen zugeordneten Lampen sind auf verschiebbaren oder verdrehbaren Trägern angeordnet, so daß bei Bedarf (Ausbrennen einer Lampe) vor der Lichteintrittsfläche eines der Kabelbäume für ein Anzeigesymbol eine neue Lampe positioniert werden kann. So können ausgebrannte Lampen einfach durch "neue" Lampen ersetzt werden.

Für Lichtanzeigesysteme der genannten Gattung sind auch sogenannte Lampensäulen bekannt. Das sind im wesentlichen würfel- oder quaderförmige Gehäuse, an welchen die Einspeisungsenden von (zwei) Lichtleitern (Lichtleiterbündel) festgelegt sind. In dem Gehäuse, von welchem die Lichtleiterbündel ausgehen, ist ein im wesentlichen diagonal angeordneter Verteilspiegel mit 50% Reflexion und 50% Durchlaß vorgesehen, durch den das von einer Lichtquelle (Halogenlampe) kommende Licht gleichmäßig auf beide Lichtleiter aufgeteilt wird. Bei den bekannten Lampensäulen ist dem Gehäuse eine Reservelampe (Nebenlampe) zugeordnet, die nach dem Ausbrennen der Hauptlampe in Betrieb genommen wird, so daß das Austauschen von Lampen erst erforderlich ist, wenn sowohl die Hauptlampe als auch die Nebenlampe ausgebrannt ist.

Aus der CH 680 944 A ist eine Lampenwechselvorrichtung für einen Leuchtkörper (Scheinwerfer) von Signalanlagen mit einem Reflektor und mit einer in dessen Brennpunkt angeordneten Lampe bekannt. Die bekannte Wechselvorrichtung besitzt einen drehbaren Träger für mehrere identische Lampen. Wenn eine Lampe ausgebrannt ist, wird der Träger so verdreht, daß eine neue Lampe im Brennpunkt des Reflektors angeordnet ist.

Aufgabe der Erfindung ist es, eine Lampensäule der eingangs genannten Gattung dahingehend zu verbessern, daß eine längere Betriebsdauer erreicht wird. Dies ist insbesondere von Bedeutung, wenn die erfindungsgemäße Lampensäule im Zusammenhang mit Lichtanzeigesystemen von Wechselverkehrszeichen verwendet wird, die an Schilderbrücken, wie sie beispielsweise an Schnellstraßen oder Autobahnen verwendet werden, vorgesehen sind.

Erfindungsgemäß wird diese Aufgabe mit einer Lampensäule mit den im Kennzeichen von Anspruch 1 genannten Merkmalen erreicht.

Bevorzugte und vorteilhafte Ausgestaltungen der erfindungsgemäßen Lampensäule sind Gegenstand der Unteransprüche.

Bei der erfindungsgemäßen Lampensäule sind im Regelfall eine Hauptlampe und wenigstens drei Nebenlampen vorgesehen, wobei die Hauptlampe und die Nebenlampen auf verstellbaren Trägern angebracht sind, so daß nach dem Ausbrennen jeweils einer Lampe zunächst die erste Nebenlampe, dann die zweite, usw. Nebenlampe in Betrieb genommen werden kann, indem einfach die Träger für die Haupt- und Nebenlampen entsprechend verstellt werden, um die jeweils in Betrieb zu setzende Lampe neben der Lichteintrittsöffnung des Gehäuses der Lampensäule in Stellung zu bringen.

In einer Ausführungsform der Erfindung kann vorgesehen sein, daß der Träger für die Hauptlampe und die Nebenlampen einfache Schieber sind, die an den entsprechenden Seiten der Lampensäule bzw. des quaderförmigen Gehäuses derselben geführt sind.

Wenn je Träger zwei Lampen vorgesehen sind, und die Träger in der Gebrauchslage der Lampensäule in lotrechter Richtung zu verschieben sind, genügt es, den Schiebern einen Auslöser zuzuordnen, der den Schieber im Bedarfsfall freigibt, so daß der Schieber unter Wirkung seines Gewichtes nach unten gleitet und die nächste an ihm vorgesehene Lampe (z.B. die erste Nebenlampe) in ihre Wirkstellung bringt.

Es versteht sich, daß solche Schieber auch jeweils mehr als zwei Lampen tragen können, wobei das Verstellen schrittweise erfolgt.

Anstelle von Schiebern mit Lampen (Haupt- und Nebenlampen) können auch verdrehbare Träger vorgesehen sein, die durch Verdrehen so eingestellt werden, daß die jeweils gewünschte Lampe der entsprechenden Lichteintrittsöffnung im Gehäuse der Lampensäule zugeordnet ist.

Weitere bevorzugte Merkmale, sowie Einzelheiten und Vorteile der Erfindung ergeben sich aus der nachstehenden Beschreibung bevorzugter Ausführungsbeispiele anhand der Zeichnungen.

Es zeigt:
Fig. 1 bis 3 eine bekannte Ausführungsform einer Lampensäule in drei Ansichten,
Fig. 4 in Draufsicht eine erfindungsgemäße Lampensäule bei abgenommenem, oberem Abschlußdeckel,
Fig. 5 die Lampensäule von unten der Fig. 4 aus gesehen,
Fig. 6 die Lampensäule von unten der Fig. 4 aus gesehen bei verschobenem Träger,
Fig. 7 in Draufsicht eine zweite Ausführungsform einer erfindungsgemäßen Lampensäule mit verdrehbaren Trägern für Lampen,
Fig. 8 eine Ansicht der Lampensäule von oben der Fig. 7 aus gesehen,
Fig. 9 eine andere Ausführungsform einer Lampensäule in Schrägansicht,
Fig. 10 das Gehäuse der Lampensäule aus Fig. 9,
Fig. 11 einen Schnitt längs der Linie A-A in Fig. 10,
Fig. 12 einen Deckel für die Lampensäule,
Fig. 13 den Deckel aus Fig. 12 in Gebrauchslage,
Fig. 14 den Deckel aus Fig. 12 und 13 im Diagonalschnittt,
Fig. 15 einen Auslöser für die Schieber in der Wirklage,
Fig. 16 den Auslöser in der den Schieber freigebenden Lage,
Fig. 17 die Lampensäule aus Fig. 9 in Seitenansicht,
Fig. 18 die Lampensäule aus Fig. 9 in Seitenansicht bei verschobenem Schieber,
Fig. 19 die Lampensäule mit einer Halterung für den Verteilspiegel,
Fig. 20 eine Draufsicht auf die Halterung für den Verteilspiegel,
Fig. 21 eine Draufsicht auf die Lampensäule mit den beiden Auslösemagneten,
Fig. 22 den Haltebügel für den Verteilspiegel,
Fig. 23 den Haltebügel für den Verteilspiegel von rechts der Fig. 22 aus gesehen,
Fig. 24 den Haltebügel für den Verteilspiegel von oben der Fig. 22 gesehen,
Fig. 25 den in der Darstellung der Lampensäule gemäß Fig. 9 linken Schieber,
Fig. 26 den rechten Schieber,
Fig. 27 und 28 die Schieber aus Fig. 25 bzw. Fig. 26 im Horizontalschnitt,
Fig. 29 einen Schnitt längs der Linie B-B von Fig. 26,
Fig. 30 einen Schnitt längs der Linie A-A in Fig. 26,
Fig. 31 einen Schnitt längs der Linie C-C von Fig. 26,

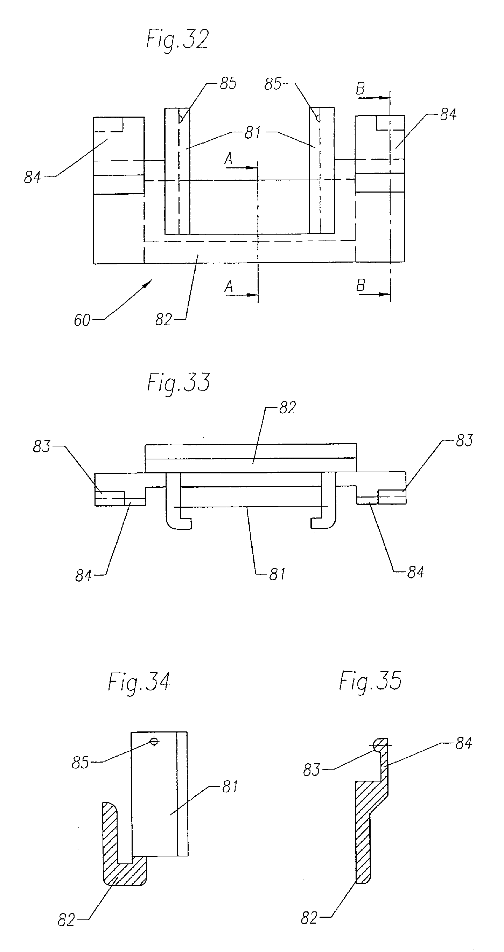

Fig. 32 einen Halteteil für einen Mikroschalter in Ansicht,
Fig. 33 eine Draufsicht hiezu,
Fig. 34 einen Schnitt längs der Linie A-A in Fig. 32 und
Fig. 35 einen Schnitt längs der Linie B-B in Fig. 32.

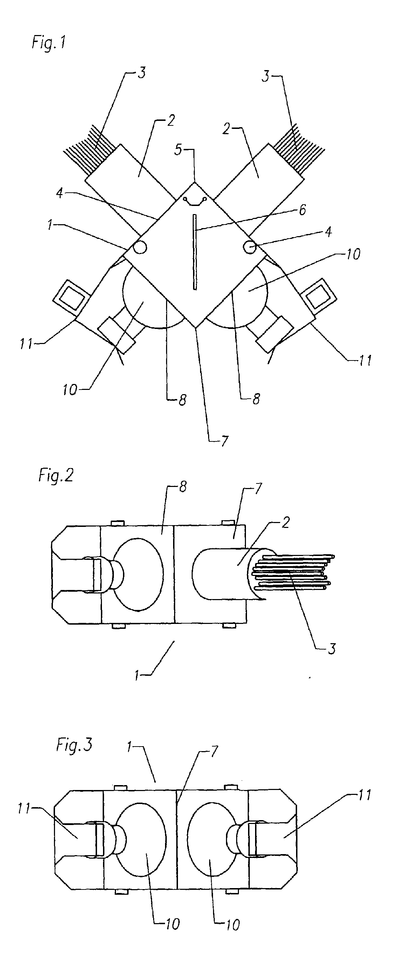

Die in den Fig. 1 bis 3 gezeigte, bekannte Ausführungsform einer Lampensäule besitzt ein im wesentlichen würfelförmiges Gehäuse 1, an dem die Einspeisungsenden 2 von Lichtleiterbündeln 3 angebracht sind. Dabei sind die Einspeisungsenden 2 an den zu einer gemeinsamen Kante 5 des Gehäuses 1 verlaufenden Wänden 4 des würfelförmigen Gehäuses 1 angeordnet.

Innerhalb des Gehäuses 1 ist ein diagonal ausgerichteter und von der Kante 5 des Gehäuses 1 ausgehender Verteilspiegel 6 mit 50% Reflexion und 50% Durchlässigkeit angeordnet.

An den Wänden 8 des Gehäuses 1, die zu einer gemeinsamen Kante 7 verlaufen, sind je eine Lampe 10, vorzugsweise eine Halogenlampe, angeordnet, die beispielsweise mit Hilfe von Federklemmen 11 festgehalten werden. Die eine Lampe 10 ist die sogenannte "Hauptlampe" und die andere Lampe 10 ist die sogenannte "Nebenlampe". Die Lampen 10 sind neben Öffnungen in den Wänden 8 des Gehäuses 1 angeordnet, so daß von ihnen abgegebenes Licht durch den Verteilspiegel 6 gleichmäßig auf beide Lichtleiterbündel 3 verteilt wird. Die Lichtleiterbündel 3 leiten Licht zu Informationszeichen, z.B. den Teilen eines Wechselverkehrszeichens, so daß dieses Symbol am Wechselverkehrszeichen leuchtet, wenn die Hauptlampe 10 in Betrieb ist.

Wenn die als Hauptlampe betriebene Lampe 10 am Ende ihrer Lebensdauer ausbrennt, wird selbstätig oder durch manuelle Schaltung die zweite Lampe 10, die als Nebenlampe dient, in Betrieb genommen, so daß ohne Auswechseln von Lampen die Funktion des Wechselverkehrszeichens oder des anderen Anzeigesystems im wesentlichen ohne Unterbrechung gewährleistet ist.

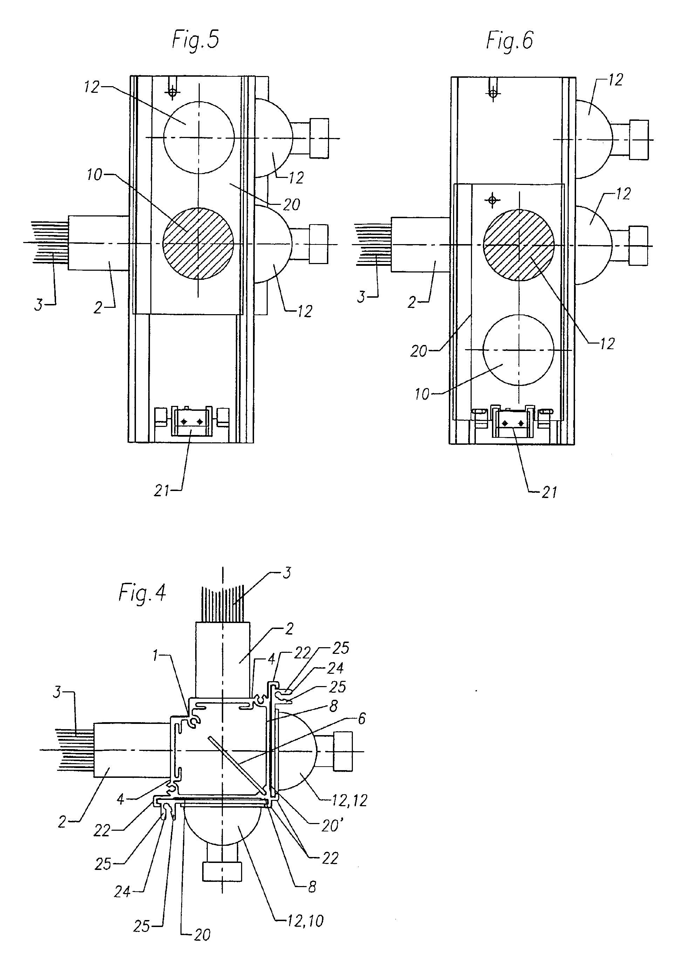

Bei der ersten, erfindungsgemäßen Ausführungsform einer Lampensäule, wie sie in den Fig. 4 bis 6 gezeigt ist, ist ebenfalls ein Gehäuse 1 vorgesehen, das quaderförmig ausgeführt ist. In dem Gehäuse 1 ist der Verteilspiegel 6 vorgesehen und an das Gehäuse 1 sind an dessen Wänden 4 die Einspeisungsenden 2 von Lichtwellenleiterbündeln 3 angeordnet. In den Wänden 8 des quaderförmigen Gehäuses 1 der erfindungsgemäßen Lampensäule sind in der Höhe der Einspeisungsenden 2 der Lichtwellenleiterbündel 3 Durchtrittsöffnungen vorgesehen. So werden die Lichtwellenleiterbündel 3 gleichmäßig mit Licht beaufschlagt, wenn die eine oder andere der Lampen 10, 12 in Betrieb genommen ist.

Bei der erfindungsgemäßen Lampensäule sind wenigstens eine Hauptlampe 10 und wenigstens eine Nebenlampe 12 an Schiebern 20 angeordnet, die wahlweise und bei Bedarf so verschoben werden können, daß die jeweils gewünschte Lampe 10, 12 vor einer der Eintrittsöffnungen für Licht in den Wänden 8 des Gehäuses 1 angeordnet werden kann.

Dieses Verschieben kann einfach so erfolgen, daß bei im wesentlichen lotrecht ausgerichteter Lampensäule ausgehend von der in Fig. 5 gezeigten Stellung der Schieber 20 mit der Hauptlampe 10 durch Lösen einer Rückhaltevorrichtung (nicht gezeigt) freigegeben wird. Die Stellung des Schiebers 20, in der die an diesem Schieber 20 angeordnete Nebenlampe 12 vor der Eintrittsöffnung angeordnet ist, wird beispielsweise durch einen Anschlag 21 unterhalb des Schiebers 20 gesichert, wie dies in Fig. 6 gezeigt ist. Wenn auch diese Nebenlampe 12 ausgebrannt ist, wird gegebenenfalls automatisch oder einfach von Hand aus die erste Nebenlampe 12 am zweiten Schieber 20' in Betrieb genommen und nach Ausbrennen dieser Lampe auch der zweite Schieber 20' durch Lösen seiner Rückhaltevorrichtung durch sein Eigengewicht so verschoben, daß die zweite (obere) Nebenlampe 12 an diesem Schieber 20' gegenüber der Eintrittsöffnung für Licht in das Gehäuse 1 angeordnet ist.

Es versteht sich, daß in einer Ausführungsform zum Verstellen der Schieber 20, 20' auch (Zwangs-)Antriebe, wie Getriebe, Spindeln, Förderbänder, Schnur-, Seil-, oder Kabelzüge oder ähnliches vorgesehen sein können. Diese Ausführungsform hat den Vorteil, daß zuverlässig verhindert ist, daß ein Schieber 20, 20' in den Führungsschlitzen 22 am Gehäuse 1 stecken bleibt. Die parallel zur Verschieberichtung der Schieber 20, 21 ausgerichteten Nuten 24, die von Vorsprünge 25 an den Schiebern 20, 21 begrenzt sind, dienen dazu, Klemmbügel für Lampenhalter zu halten.

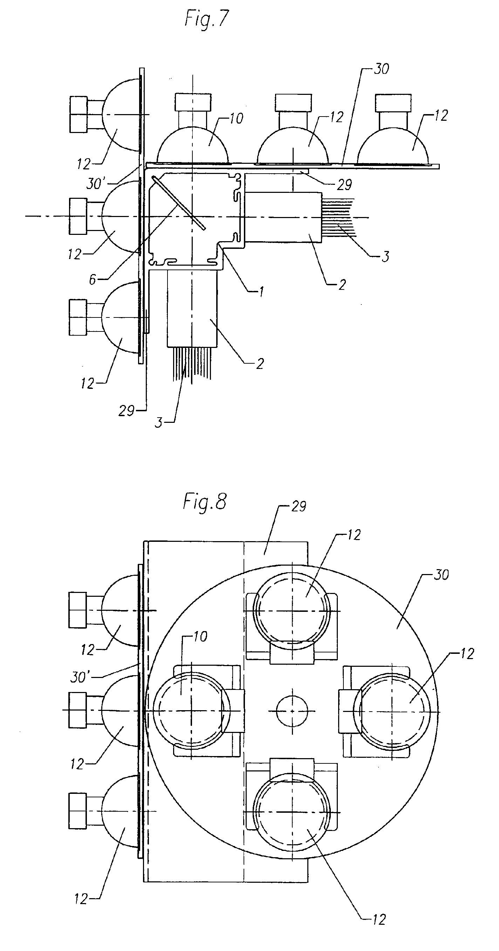

Bei der in den Fig. 7 und 8 gezeigten Ausführungsform sind die Hauptlampe 10 und die in diesem Fall sieben Nebenlampen 12 auf drehbaren Trägern 30, 30' montiert. Diese Träger 30, 30' werden so verstellt (verdreht), daß nach dem Ausbrennen der Hauptlampe 10 die Nebenlampen 12 nacheinander der entsprechenden Eintrittsöffnung für Licht in den Wänden 8 des Gehäuses 1 gegenüberliegend angeordnet werden und so die Lichtwellenleiterbündel 3 mit Licht beaufschlagt werden. Sobald eine der Lampen 12 ausgebrannt ist, wird durch Verdrehen des entsprechenden kreisförmigen Trägers 30 oder 30' die nächste Lampe 12 in Betrieb genommen, nachdem sie in ihre Wirkstellung bewegt worden ist. Die Träger 30 und 30' können wie in Fig. 7 gezeigt, an vom Gehäuse 1 abstehenden Flügeln 29 gelagert sein.

Bei der erfindungsgemäßen Lampensäule wird die Lebensdauer von an der Lampensäule angeordneten Lampen, insbesondere Halogenlampen, in den Ausführungsbeispielen eine Hauptlampe 10 und drei bzw. sieben Nebenlampen 12 vollständig ausgenützt, wobei das Licht dieser Lampen mittels eines beschichteten Verteilspiegels 6 (50% Reflexion, 50% Durchlaß) aufgeteilt wird. Bei Ausfall der Hauptlampe 10 wird, vorzugsweise automatisch, die Nebenlampe 12 wirksam, womit ein Wartungsintervall von beispielsweise vier Mal der Lebensdauer einer Einzellampe (Fig. 4 bis 6) bzw. acht Mal der Lebensdauer einer Einzellampe (Fig. 7 und 8) möglich ist.

Bei der erfindungsgemäßen Lampensäule wird der Lampenwechsel wie folgt ausgeführt:

Nach dem Ausfall der Hauptlampe 10 wird, vorzugsweise automatisch, der Schieber 20 mit der Hauptlampe 10 und der Nebenlampe 12 freigegeben und rutscht nach unten, und wird mit Hilfe des Anschlages 21 positioniert. So ist die erste Nebenlampe 12 gegenüber der Öffnung in der Wand 8 des Gehäuses 1 der Lampensäule angeordnet und kann dort wirksam werden. Sobald diese erste Nebenlampe 12 ausgefallen ist, wird die erste Nebenlampe 12 am zweiten Schieber 20' aktiviert und, nachdem diese Lampe ausgebrannt ist, wird die zweite Nebenlampe 12 am zweiten Schieber 20' in Betrieb genommen.

Die erfindungsgemäße Lampensäule kann auch so betrieben werden, daß nach dem Ausfall der Hauptlampe 10 am Schieber 20 die untere Nebenlampe 12 am Schieber 20' in Betrieb genommen wird. Während nun die Lampe 12 Licht abgibt, wird der Schieber 20 nach unten verschoben, so daß die an diesem angeordnete Nebenlampe 12 im Bereich der Lichteintrittsöffnung angeordnet ist. Sobald die erste Nebenlampe 12 am Schieber 20' am Ende ihrer Lebensdauer ausbrennt, wird die Nebenlampe 12 am Schieber 20 in Betrieb genommen und während diese Licht abgibt, der Schieber 20' verschoben, so daß die an ihm oben angeordnete Nebenlampe 12 gegenüber der Lichteintrittsöffnung des Gehäuses 1 angeordnet ist.

Durch dieses kreuzweise Schalten der Lampen 10 und 12 können die in der Norm VDE 0832 geforderten kurzen Schaltzeiten von 0,3 sek beim Lampenwechsel ohne weiteres eingehalten werden.

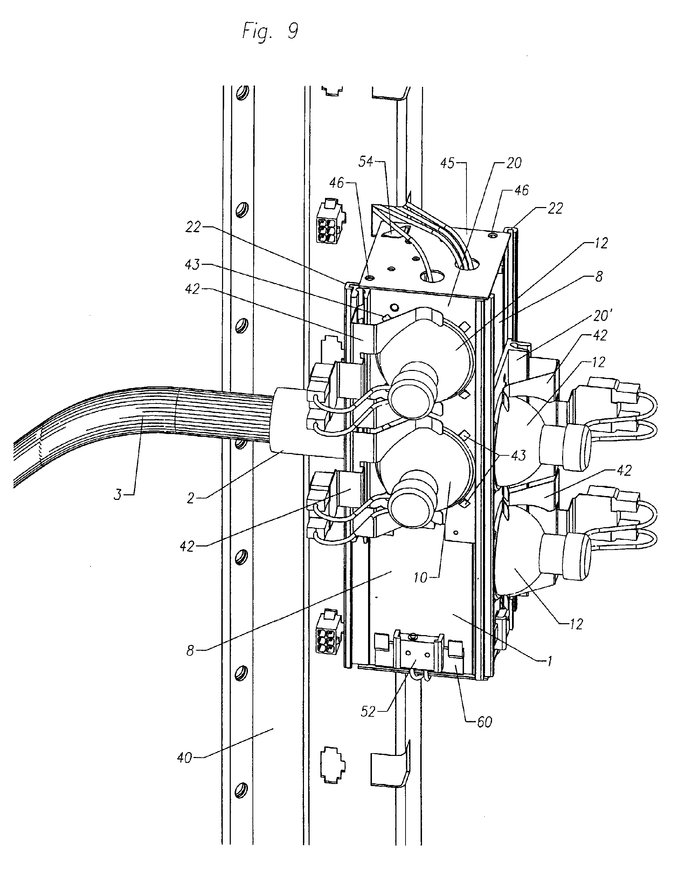

Die in Fig. 9 gezeigte Ausführungsform einer erfindungsgemäßen Lampensäule besitzt ebenfalls ein Gehäuse 1, das in Fig. 9 an einem lotrechten Träger 40 festgelegt ist. In das Lampengehäuse 1 münden zwei Lichtwellenleiterbündel 3 (nur eines ist zu sehen) an Einspeisungsstellen 2, die an der in Fig. 9 linken und hinteren Wand des Gehäuses 1 angeordnet sind.

An zwei zu einer gemeinsamen Kante führenden Wände 8 des Gehäuses 1 sind die Schieber 20, 20' angeordnet und in Nuten 22 an den Kanten des Gehäuses 1 verschiebbar. Die Lampen (eine Hauptlampe 10 und drei Nebenlampen 12) sind an den Schiebern 20, 20' mit Hilfe von Federklemmen 42 festgelegt, wobei die Lampen 10, 12 durch aus den Schiebern 20, 20' hochgebogene Zungen 43 gegenüber den Lichtdurchtrittsöffnungen 44 in den Schiebern 20, 20' zentriert sind.

Oben und unten ist das Gehäuse 1 durch Deckel 45 verschlossen, die Durchtrittsöffnungen für Leitungen aufweisen. Die Deckel 45 sind durch Schrauben 46, die in Schraubnuten 47 im Bereich der Kanten des Gehäuses 1 eingedreht sind, am Gehäuse 1 festgelegt.

Die Schieber 20, 20' werden in der in Fig. 9 gezeigten Ausführungsform durch magnetisch betätigte Raststifte 48, die in Löcher 49 in den Schiebern 20, 20' durch Federn 51 belastet eingreifen, in der in Fig. 9 für den Schieber 20 gezeigten Stellung gehalten (der Schieber 20' ist gegenüber dem Gehäuse 1 nach unten verstellt).

Am unteren Ende der Außenwand des Gehäuses 1 sind von Halterungen 60 gehalten Schalter 52 vorgesehen, welche durch einen nach unten verstellten Schieber 20, 20' betätigt werden. Die Halterungen 60 für die Schalter 52 dienen gleichzeitig als untere Begrenzung des Verschiebeweges der Schieber 20, 20'.

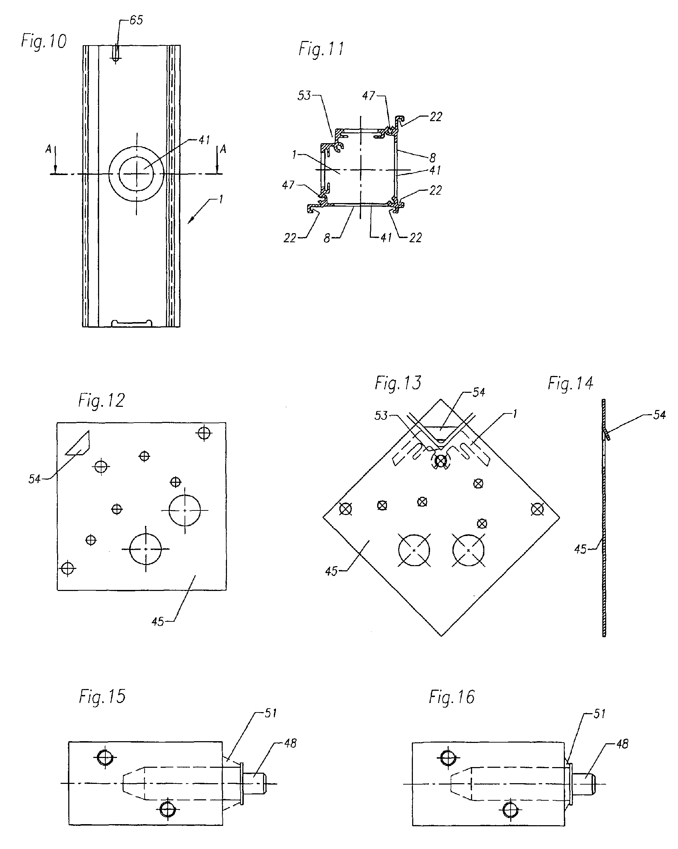

Die Fig. 10 und 11 zeigen das Gehäuse 1 der Lampensäule der in Fig. 9 gezeigten Ausführungsform für sich. Es ist die Lichteintrittsöffnung 41 zu sehen und die Schnittdarstellung von Fig. 11 zeigt auch die Nuten 22 an den Kanten des Gehäuses, in welchen die Schieber 20, 20' geführt sind. Weiters zeigt Fig. 11 die den Lichteintrittsöffnungen gegenüberliegenden Löchern im Gehäuse für die Einspeisungsenden 2 der Lichtwellenleiterbündel 3.

Der in den Fig. 12 bis 14 gezeigte Deckel 45 (ein solcher ist am oberen und am unteren Ende des Gehäuses 1 befestigt) besitzt drei Löcher für den Durchtritt von Befestigungsschrauben 46, die in Schraubnuten 47 (siehe Fig. 11) eingedreht werden können, um einen Deckel 45 am oberen und am unteren Ende des Gehäuses 1 festzulegen. In der Ecke des Deckels 45, die bei am Gehäuse 1 montierten Deckel 45 im Bereich der nach innen springenden Ecke 53 des Gehäuses 1 vorgesehen ist, ist eine trapezförmige Zunge 54 freigestanzt, die (Fig. 14) aus der Ebene des Deckels 45 herausgebogen ist. Mit Hilfe dieser aus der Ebene der Deckel 45 herausgebogenen Zungen 54 können die Lampensäulen der Ausführungsform von Fig. 9 an dem Träger 40 durch einfaches Aufrasten festgelegt werden, indem die den Zungen 54 benachbarten Eckbereiche der Deckel 45 durch Löcher im Träger 40 gesteckt werden, bis die aus der Ebene der Deckel 45 herausgebogenen Zungen 54, wie dies Fig. 13 zeigt, von innen am Träger 40 anliegen.

Die Fig. 15 und 16 zeigen den Raststift 48 und den ihm zugeordneten Betätigungsmagnet. Bei nicht mit Strom beaufschlagtem Magnet wird der als Anker des Magnet ausgebildete Raststift 48 von einer in Fig. 15 nur symbolisch angedeuteten Feder 51 nach außen gedrückt und greift durch einen nach oben offenen Schlitz 65 in der Wand des Gehäuses 1 in die Rastöffnung 49 am oberen Ende des zugeordneten Schiebers 20, 20'. Wird der Magnet mit Strom beaufschlagt, dann wird der Raststift 48 durch Magnetkräfte entgegen der Kraft der Feder 51 nach innen verschoben (Fig. 16) und der Schieber 20, 20' freigegeben, so daß er von den Nuten 22 an der Außenseite des Gehäuses 1 geführt in die in Fig. 9 für den Schieber 20' gezeigte Stellung nach unten gleitet.

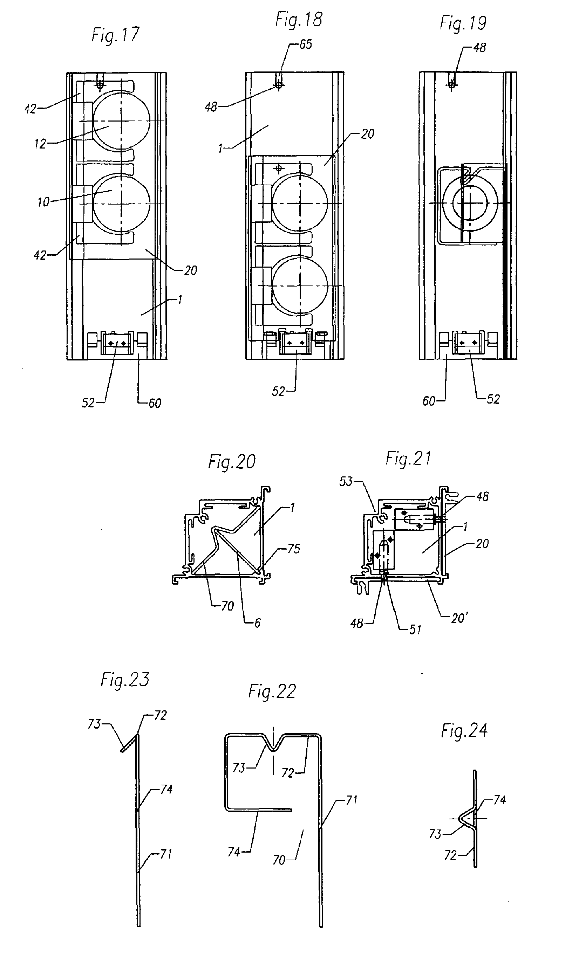

Die Fig. 17 und 18 zeigen die Lampensäule in Seitenansicht, wobei der Schieber 20 in Fig. 17 in seiner oberen, vom Raststift 48 gehaltenen Lage und in Fig. 18 in der nach unten verschobenen Lage dargestellt ist, in der er den Schalter 52 betätigt.

Fig. 19 und 20 zeigen den Verteilspiegel 6 und die Art und Weise, wie dieser im Inneren des Gehäuses 1 befestigt ist. Zum Befestigen des Verteilspiegels 6 dient die in den Fig. 22 bis 24 gezeigte Halteklammer 70. Diese Halteklammer 70 besitzt einen langen Schenkel, der bei montierter Halteklammer 70 in einer Innenecke (Fig. 20) von innen her am Gehäuse 1 anliegt. In dem oberen, horizontalen Schenkel 72 ist eine V-förmige Ausbiegung 73 vorgesehen, die zusätzlich aus der Ebene der Halteklammer 70 herausgebogen ist (Fig. 23 und 24). Das freie Ende 74 der Halteklammer 70 ist wieder horizontal umgebogen und dient als Abstützung für den Verteilspiegel 6 von unten her. Fig. 20 zeigt, daß der Verteilspiegel 6 einerseits in eine Nut 75 an der Innenecke des Gehäuses 1 eingesetzt ist und an seiner gegenüberliegenden Kante von der V-förmigen Ausbiegung 73 gehalten ist. Mit seinem unteren Rand steht der Haltespiegel 6 auf dem horizontalen Ende 74 der Halteklammer 70 auf.

Die in den Fig. 22 und 23 gezeigte Halteklammer 70 für den Verteilspiegel 6 erfüllt zwei wesentliche Funktionen. Zum einen wird durch die Ausgestaltung der Halteklammer 70 in ihrem oberen Teil (Ausbiegung 73) erreicht, daß der Verteilspiegel 6 richtig positioniert und ein horizontales Verschieben des Verteilspiegels 6 verhindert ist. Zum anderen stützt sich die Halteklammer 70 in ihrem Fußpunkt (unteres Ende des Schenkels 71) am Gehäuse 1 im Bereich des unten angeordneten Deckels 45 ab, so daß durch die Halteklammer 70 auch eine Höhenpositionierung des Verteilspiegels 6 erfolgt.

Fig. 21 zeigt die Anordnung der beiden Magneten für das Betätigen der Raststifte 48 und daß diese bei nicht mit Strom beaufschlagten Magneten durch den nach oben offenen Schlitz 65 nach außen greifen, so daß sie in die Rastöffnung 49 in den Schiebern 20, 20' eingreifen und diese in ihrer oberen Stellung festhalten.

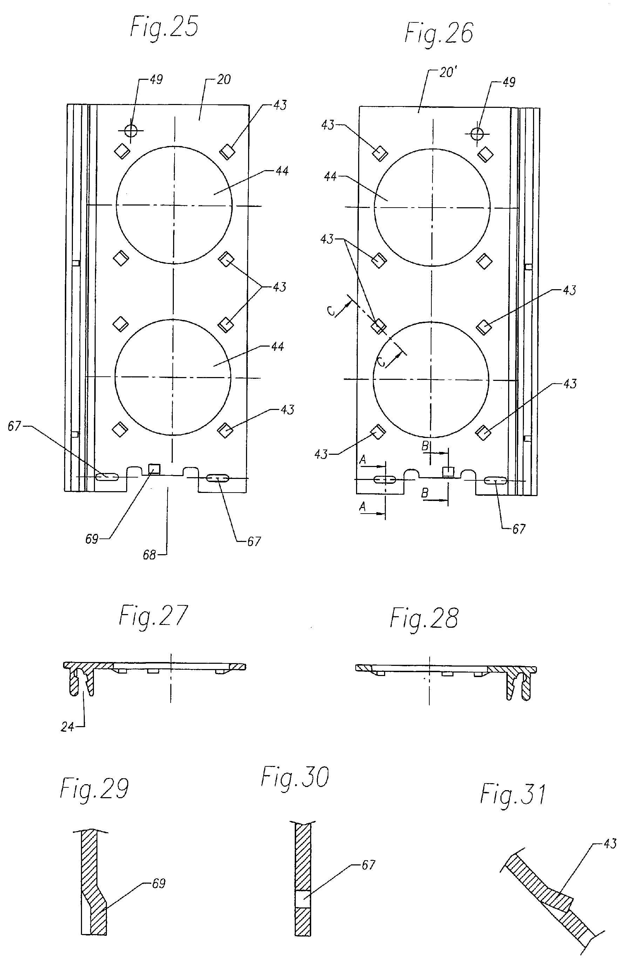

Fig. 25 zeigt den Schieber 20 und Fig. 26 den zum Schieber 20 spiegelsymmetrisch ausgebildeten Schieber 20'. Der Schieber 20 besitzt zwei Lichtdurchtrittsöffnungen 44, um die herum die hochgebogenen Zungen 43 zum Zentrieren der Lampen 10, 12 angeordnet sind (siehe Schnitt Fig. 29). An dem in Fig. 25 rechten, lotrechten Rand des Schiebers 20 ist eine Nut 24 ausgebildet, in der die Halteklammern 42 für das Festlegen der Lampen 10, 12 am Schieber 20, 20' eingesetzt werden. Diese Klammern 42 tragen gleichzeitig Steckerteile zur Stromversorgung der Lampen 10, 12. Im Bereich des unteren, horizontalen Randes des Schiebers 20 ist eine Ausklinkung 68 vorgesehen. Neben der Ausklinkung 68 ist im Schieber 20 eine schräg herausgebogene Zunge 69 freigestanzt (Fig. 31). Im Bereich des unteren Randes sind in der nach außen weisenden Fläche des Schiebers 20 noch zwei Vertiefungen 67 (Fig. 30) vorgesehen, die zum Festlegen der Halterung 60 für den Schalter 52 dienen.

Die Halterung 60 für den Schalter 52 ist beispielsweise ein im Spritzgußverfahren hergestellter Kunststoffteil, der zwei Haltelaschen 81 für den Schalter 52 und an seinem unteren Rand eine U-förmige Leiste 82 aufweist, in die das untere Ende der Wand 8 des Gehäuses 1 eingreift. Die Halterung 60 wird von unten her auf den unteren Rand der Wand 8 des Gehäuses 1 aufgesteckt, an der ein Schieber 20, 20' verschiebbar geführt ist. Die Rastvorsprünge 83 an den Zungen 84, welche bei nach unten verschobenem Schieber 20, 20' in die Vertiefungen 67 an der Vorderseite des Schiebers 20, 20' (Fig. 30) eingreifen, dienen dazu, den Schieber 20, 20' in der nach unten verschobenen Stellung zu halten. Die Halterung 60 wird am unteren Ende der Wand 8 des Gehäuses 1 durch den unteren Deckel 45 gehalten. Um den Schalter 52 in der Halterung 60 sicher zu halten, sind an den Innenflächen der Haltelaschen 81 aufeinanderzu vorspringende Noppen 85 vorgesehen, unter denen der Schalter 52 einrastet, wenn er von oben her eingeschoben wird.

Mit Hilfe dieser Konstruktion kann das Wartungsintervall auf die Standzeit von vier oder mehr Lampen erhöht werden.

Es versteht sich, daß an den Schiebern 20, 20' auch mehr als zwei Lampen angeordnet sein können, wenn die Schieber entsprechend lang ausgebildet werden. Sinngemäß können an den Trägern 30, 30' weniger oder mehr als vier Lampen angeordnet sein.

Zusammenfassend kann ein Ausführungsbeispiel der Erfindung wie folgt dargestellt werden:

Eine Lampensäule besitzt ein Gehäuse 1, an dem Anschlußenden 2 von zwei Lichtwellenleitern 3 festgelegt sind. In dem im wesentlichen quaderförmigen Gehäuse 1 ist ein Verteilspiegel 6 angeordnet, der Licht aus einer Lichtquelle 10, 12 gleichmäßig auf beide Lichtwellenleiter 3 verteilt. An beiden den Anschlußenden 2 gegenüberliegenden Wänden 8 des Gehäuses 1 sind eine Hauptlampe 10 und wenigstens zwei, vorzugsweise aber drei oder mehr Nebenlampen 12 angeordnet, die auf Schiebern 20, 20' montiert sind, die in der Gebrauchslage lotrecht verschiebbar in Führungsnuten 22 an den Gehäusewänden 8 verschiebbar sind. Nach dem Ausbrennen der Hauptlampe 10 wird eine Rückhaltevorrichtung gelöst und der Schieber 20 gleitet unter seinem Eigengewicht bis zu einem Anschlag 21 nach unten. So wird die am Schieber 20 montierte erste Nebenlampe 12 in ihrer Wirkstellung angeordnet und kann in Betrieb genommen werden. So können ohne manuelle Austausch- oder Servicearbeiten nacheinander wenigstens vier Lampen (eine Hauptlampe 10 und drei Nebenlampen 12) in Betrieb genommen werden.

## Patentansprüche

1. Lampensäule mit einem Gehäuse (1), an das an zwei Wänden (4) die Anschlußenden (2) von Lichtwellenleiterbündeln (3) angeordnet sind, wobei an den Anschlußenden (2) gegenüberliegenden Wänden (8) des Gehäuses (1) eine Hauptlampe (10) und wenigstens eine Nebenlampe (12) angeordnet sind, und wobei innerhalb des Gehäuses (1) ein diagonal verlaufender Verteilspiegel (6) angeordnet ist, dadurch gekennzeichnet, daß die Hauptlampe (10) und wenigstens zwei Nebenlampen (12) auf wenigstens einem Träger (20, 20'; 30, 30') angeordnet sind, der für den Lampenwechsel verstellbar ist, um die jeweils nächste, in Betrieb zu setzende Lampe (12) vor der Eintrittsöffnung (41) für Licht in das Gehäuse (1) anzuordnen.

2. Lampensäule nach Anspruch 1, dadurch gekennzeichnet, daß der Träger eine verdrehbare Scheibe (30, 30') ist.

3. Lampensäule nach Anspruch 1, dadurch gekennzeichnet, daß der Träger ein Schieber (20, 20') ist.

4. Lampensäule nach einem der Ansprüche 1 bis 3, dadurch gekennzeichnet, daß an dem Träger (20, 20'; 30, 30') wenigstens drei, vorzugsweise vier Lampen (12) angeordnet sind.

5. Lampensäule nach einem der Ansprüche 1 bis 4, dadurch gekennzeichnet, daß Träger (20, 20'; 30, 30') für die Hauptlampe (10) und für die Nebenlampen (12) beiden den Anschlußenden (2) von Lichtwellenleitern (3) gegenüberliegenden Wänden (8) des Gehäuses (1) zugeordnet sind.

6. Lampensäule nach einem der Ansprüche 3 bis 5, dadurch gekennzeichnet, daß der wenigstens eine Schieber (20, 20') in Nuten (22) am Rand der Außenseite der Wand (8) geführt sind.

7. Lampensäule nach einem der Ansprüche 3 bis 6, dadurch gekennzeichnet, daß jeder Schieber (20, 20') zwei Lampen (10, 12) trägt, so daß von den insgesamt vier Lampen eine als Hauptlampe (10) und drei als Nebenlampen (12) vorgesehen sind.

8. Lampensäule nach einem der Ansprüche 3 bis 7, dadurch gekennzeichnet, daß dem Schieber ein Zwangsantrieb zum Verstellen zugeordnet ist.

9. Lampensäule nach einem der Ansprüche 3 bis 8, dadurch gekennzeichnet, daß dem Schieber (20, 20') eine Rückhaltevorrichtung (48) zugeordnet ist, die zum Verstellen lösbar ist.

10. Lampensäule nach einem der Ansprüche 3 bis 9, dadurch gekennzeichnet, daß die nach unten verstellte Stellung des Schiebers (20, 20') durch wenigstens einen Anschlag (21, 81) definiert ist.

11. Lampensäule nach Anspruch 2, 4 oder 5, dadurch gekennzeichnet, daß der drehbaren Platte (30, 30') ein Antrieb zum Verstellen der Platte (30, 30') zugeordnet ist.

12. Lampensäule nach einem der Ansprüche 1 bis 11, dadurch gekennzeichnet, daß die als Träger für die Hauptlampe (10) und die Nebenlampen (12) vorgesehenen Schieber (20, 20') in an den lotrechten Rändern von zwei einander benachbarten Wänden (8) des Gehäuses (1) vorgesehenen Nuten (22) verschiebbar geführt sind.

13. Lampensäule nach einem der Ansprüche 1 bis 12, dadurch gekennzeichnet, daß in den Schiebern (20, 20') Durchgangsöffnungen (44) vorgesehen sind, zu denen konzentrisch die Lampen (10, 12) an den Schiebern (20, 20') befestigt sind und daß zum Zentrieren der Lampen (10, 12) außerhalb der Öffnungen (44) Zentriervorsprünge (43) vorgesehen sind.

14. Lampensäule nach Anspruch 13, dadurch gekennzeichnet, daß die Zentriervorsprünge (43) aus den Schiebern (20, 20') hochgebogene Zungen sind.

15. Lampensäule nach einem der Ansprüche 1 bis 14, dadurch gekennzeichnet, daß das Gehäuse (1) an seiner Unterseite und an seiner Oberseite durch je einen mit dem Gehäuse (1) verbundenen Deckel (45) verschlossen ist.

16. Lampensäule nach einem der Ansprüche 1 bis 15, dadurch gekennzeichnet, daß an dem das Gehäuse (1) an seiner Oberseite verschließenden Deckel (45) die Rückhaltevorrichtung (48), die zum Freigeben der Schieber (20, 20') betätigbar ist, befestigt ist.

17. Lampensäule nach Anspruch 16, dadurch gekennzeichnet, daß die Rückhaltevorrichtung einen federbelasteten (54) Rückhaltestift (48) aufweist, der zum Freigeben durch einen Linearmotor verstellbar ist.

18. Lampensäule nach Anspruch 17, dadurch gekennzeichnet, daß der Linearmotor ein Elektromagnet ist.

19. Lampensäule nach Anspruch 17 oder 18, dadurch gekennzeichnet, daß der Rückhaltestift (48) durch eine Öffnung (65) in der Wand (8) des Gehäuses (1) ragt und in seiner Wirkstellung in eine Öffnung (49) im Schieber (20, 20') eingreift.

20. Lampensäule nach Anspruch 19, dadurch gekennzeichnet, daß die Öffnung (65) in der Wand (8) des Gehäuses (1) ein zum oberen Ende des Gehäuses (1) hin offener Schlitz ist.

21. Lampensäule nach einem der Ansprüche 1 bis 20, dadurch gekennzeichnet, daß die lotrechte Kante (53) des Gehäuses (1), die zwischen den Wänden des Gehäuses (1) angeordnet ist, die den Wänden (8) des Gehäuses (1), an denen Schieber (20, 20') vorgesehen sind, gegenüberliegt, nach innen springend ausgebildet ist (Fig. 11).

22. Lampensäule nach Anspruch 21, dadurch gekennzeichnet, daß das Gehäuse (1) mit der nach innen springenden Kante (53) an einem Träger (40) anlegbar ist.

23. Lampensäule nach Anspruch 21 oder 22, dadurch gekennzeichnet, daß in den Deckeln (45), die an den Enden des Gehäuses (1) vorgesehen sind, im Bereich der nach innen springenden Kante (53) aus der Ebene der Deckel (45) herausgebogene Zungen (54) vorgesehen sind, die am Träger (40) verrastbar sind.

24. Lampensäule nach Anspruch 23, dadurch gekennzeichnet, daß die über die nach innen springende Kante (53) vorstehenden Ecken der Deckel (45) durch Löcher in dem Träger (40) greifen und daß die aus der Ebene der Deckel (45) herausgebogenen Zungen (54) von der dem Gehäuse (1) gegenüberliegenden Seite her an einem Rand der Löcher im Träger (40) anliegen.

25. Lampensäule nach einem der Ansprüche 1 bis 24, dadurch gekennzeichnet, daß an der Innenseite des Gehäuses (1) im Bereich der zwischen den Wänden (8) des Gehäuses (1), an denen die Schieber (20, 20') verschiebbar gelagert sind, eine Nut (75) vorgesehen ist, in der eine lotrechte Kante des Verteilspiegels (6) eingreift.

26. Lampensäule nach einem der Ansprüche 1 bis 25, dadurch gekennzeichnet, daß zum Festlegen des Verteilspiegels (6) im Gehäuse (1) eine Halteklammer (70) vorgesehen ist.

27. Lampensäule nach Anspruch 26, dadurch gekennzeichnet, daß die Halteklammer (70) einen Steg (72) mit einer Ausbiegung (73), in der eine lotrechte Kante des Verteilspiegels (6) eingreift, aufweist.

28. Lampensäule nach Anspruch 27, dadurch gekennzeichnet, daß vom Steg (72) des Haltebügels (70) ein gerader Schenkel (71) und ein abgewinkelter Schenkel (74) ausgehen, wobei der Verteilspiegel (60) auf dem abgewinkelten Abschnitt des abgewinkelten Schenkels (74) aufliegt.

29. Lampensäule nach Anspruch 28, dadurch gekennzeichnet, daß die zueinander parallelen Abschnitte der Schenkel (71 und 74) des Haltebügels (70) unter Vorspannung von innen her an Innenkanten des Gehäuses (1) anliegen.

30. Lampensäule nach einem der Ansprüche 1 bis 29, dadurch gekennzeichnet, daß im Bereich des unteren Endes der Wände (8), an denen Schieber (20, 20') verschiebbar geführt sind, Anschläge (60) für das Begrenzen der unteren Endstellung der Schieber (20, 20') vorgesehen sind.

31. Lampensäule nach Anspruch 30, dadurch gekennzeichnet, daß die Anschläge (60) Vorsprünge (83) aufweisen, die in Aussparungen (67) an den unteren Enden der Schieber (20, 20') eingreifen, wenn diese in ihrer nach unten verschobenen Stellung sind.

32. Lampensäule nach Anspruch 30 oder 31, dadurch gekennzeichnet, daß die Anschläge (60) Halterungen (81) für die nach unten verschobene Lage der Schieber (20, 20') erfassende Schalter (52) aufweisen.

33. Lampensäule nach einem der Ansprüche 30 bis 32, dadurch gekennzeichnet, daß die Anschläge (60) eine U-förmige Anformung (82) aufweisen, in die das untere Ende der Wand (8) des Gehäuses (1) eingreift.

34. Lampensäule nach einem der Ansprüche 30 bis 33, dadurch gekennzeichnet, daß die Anschläge (60) durch den an der Unterseite des Gehäuses (1) befestigten Deckel (45) fixiert sind.

35. Lampensäule nach einem der Ansprüche 30 bis 34, dadurch gekennzeichnet, daß am unteren Rand der Schieber (20, 20') je eine Ausklinkung (68) vorgesehen ist, in welche die Schalter (52) bzw. dessen Halterung (81) bei nach unten verstelltem Schieber (20, 20') eingreifen.

36. Lampensäule nach Anspruch 35, dadurch gekennzeichnet, daß im Bereich der Ausklinkung (68) in den Schiebern (20, 20') je eine Zunge (69) freigestanzt ist, die dem Betätigungsknopf der Schalter (52) zugeordnet ist.
